# EUROPEAN PATENT SPECIFICATION

(11) **EP 2 398 262 B1**
(45) Date of publication and mention of the grant of the patent: **02.09.2015**
(21) Application number: 10740924.5
(22) Date of filing: 10.02.2010
(51) Int. Cl.: H04L 12/64, H04M 15/00, H04L 12/24, H04L 12/14, H04W 4/24, H04L 12/813, H04L 12/851

(54) **METHOD, APPARATUS FOR CONTROLLING POLICY**
VERFAHREN UND VORRICHTUNG FÜR VORSCHRIFTSKONTROLLE
PROCÉDÉ ET APPAREIL SERVANT À CONTRÔLER UNE POLITIQUE

(30) Priority: 13.02.2009 CN 200910006944
(43) Date of publication of application: 21.12.2011
(73) Proprietor: Huawei Technologies Co., Ltd., Longgang District Shenzhen, Guangdong 518129 (CN)
(72) Inventor: LIN, Qingchun, Shenzhen Guangdong 518129 (CN); HU, Yusheng, Shenzhen Guangdong 518129 (CN)
(74) Representative: Körber, Martin Hans
(86) International application number: PCT/CN2010/070599
(87) International publication number: WO 2010/091635

(56) References cited:
- CN-A- 1 747 562
- CN-A- 101 291 446
- ETSI: "Digital cellular telecommunications system (Phase 2+); Universal Mobile Telecommunications System (UMTS); LTE; Telecommunication management; Charging management; Charging architecture and principles (3GPP TS 32.240 version 8.5.0 Release 8)", , 1 January 2009 (2009-01-01), pages 1-47, XP55021465, Retrieved from the Internet: URL:http://pda.etsi.org/exchangefolder/ts_ 132240v080500p.pdf [retrieved on 2012-03-09]
- 3GPP: "3rd Generation Partnership Project; Technical Specification Group Services and System Aspects; Policy and charging control architecture (Release 8)", , 1 January 2008 (2008-01-01), pages 1-87, XP55021317, Retrieved from the Internet: URL:http://www.quintillion.co.jp/3GPP/Spec s/23203-811.pdf [retrieved on 2012-03-08]

## Description

### FIELD OF THE INVENTION

The present invention relates to communications technologies, and in particular, to a policy control method and apparatus.

### BACKGROUND OF THE INVENTION

At present, in a system earlier than the 3rd Generation Partnership Project (3GPP) R5, the Quality of Service (QoS) authorized by the network for a User Equipment (UE) is decided according to the QoS requested by the UE, the QoS subscribed to in a Home Location Register (HLR), and the QoS available from a Serving General Packet Radio Service Support Node (SGSN) and a Gateway General Packet Radio Service Support Node (GGSN). Moreover, the network authorizes the QoS for the UE based on a Packet Data Protocol (PDP) context.

Therefore, the QoS authorization for the UE depends on the service perception of the UE. The UE determines the desired QoS and then reports it to the network through a PDP context. In practice, due to the limitation of the UE capabilities, the QoS parameters carried in the PDP context created by the UE do not meet the requirements of the service layer. That is, the QoS parameters reported by the UE to the network are not completely trustable. Moreover, the network is not capable of perceiving the service actually transmitted by the user plane. Therefore, the QoS decided according to the QoS requested by the UE does not meet the requirements accurately.

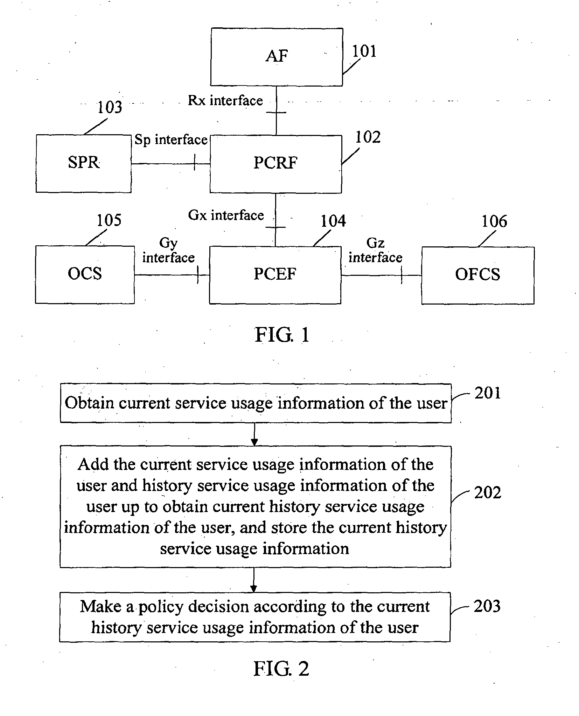

To determine the QoS accurately, Policy and Charging Control (PCC) architecture is introduced into the 3GPP R7 system. FIG. 1 shows a logical PCC architecture in a 3GPP R7 system. The basic principles of the architecture are: The UE exchanges service information with an Application Function (AF) 101; the AF 101 sends the service information to a Policy and Charging Rules Function (PCRF) 102 through an Rx interface; the PCRF 102 decides the required QoS according to the service information sent by the AF 101, the subscription information obtained from a Subscription Profile Repository (SPR) 103 through an Sp interface, and the local policy information of the PCRF 102; the determined QoS is notified to a Policy and Charging Enforcement Function (PCEF) 104 through a Gx interface; the PCEF 104 notifies the authorized QoS to the UE in an Online Charging System (OCS) 105 and an Offline Charging System (OFCS) 106 through a Gy interface and a Gz interface, or to the UE in a General Packet Radio Service (GPRS) network through a GPRS process, and executes the specified QoS, thus correlating the QoS with the application and ensuring accuracy of the QoS.

In the process of developing the present invention, the inventor finds the following problems: In the foregoing PCC architecture, the PCRF obtains the service information from the AF and decides the policy accordingly; however, at the time of authorizing the QoS to the PCEF, it is impossible to decide the policy according to the history service usage of the user.

Standard ETSI (3GPP TS 32.240 V8.5.0) "Digital cellular telecommunications system" relates to a charging management method, according to which CDR files are generated by the network and are then transferred to the network operator's Billing Domain for the purpose of subscriber billing and/or inter-operator accounting.

Standard 3GPP TS 23.203 v8.1.1 "Policy and charging control architecture" relates to a method, according to which the PCRF provides network control regarding the service data flow, gating, Qos, and flow based charging towards the PCEF.

### SUMMARY OF THE INVENTION

The embodiments of the present invention provide a policy control method and apparatus, which can perform policy control according to history service usage of the user to utilize network resources efficiently and to provide differentiated services for the user.

To fulfill such objectives, the embodiments of the present invention are based on the following technical solution:
A policy control method in an embodiment of the present invention includes:
   Obtaining, by a Policy and Charging Rules Function, PCRF, current service usage information of a user;
   adding, by the PCRF, the current service usage information of the user and history service usage information of the user which is stored in a Subscription Profile Repository, SPR, up to obtain current history service usage information of the user,
   storing, by the PCRF, the current history service usage information in the SPR; and
   deciding, by the PCRF, a policy according to the current history service usage information of the user.
A policy control apparatus in an embodiment of the present invention includes:
   an obtaining module, adapted to obtain current service usage information of a user;
   a calculation storing module, adapted to add the current service usage information of the user obtained by the obtaining module and history service usage information of the user up to obtain current history service usage information of the user, and store the current history service usage information; wherein the calculation storing module comprises: a calculating submodule, adapted to add the current service usage information of the user and history service usage information stored in a Subscription Profile Repository, SPR; and a storing submodule, adapted to store the calculation result obtained by the calculating submodule into the SPR as current history service usage information of the user; and
   a deciding module, adapted to make a policy decision according to the current history service usage information of the user.

Compared with the prior art, the embodiments of the present invention add the current service usage information of the user and the history service usage information of the user up to obtain an calculation result, and make an authorized policy decision according to the calculation result. Therefore, a policy is controlled according to the history service usage of the user without changing the network architecture, the network resources are utilized efficiently, and differentiated services are provided for the user.

### BRIEF DESCRIPTION OF THE DRAWINGS

To make the technical solution under the present invention or in the prior art clearer, the following describes the accompanying drawings that illustrate the embodiments of the present invention or the prior art. Evidently, the accompanying drawings are described and not exhaustive, and a person skilled in the art can derive other drawings from such accompanying drawings without any creative effort.
FIG. 1 shows a logical PCC architecture in a 3GPP R7 system in the prior art;
FIG. 2 is a flowchart of a policy control method according to a first embodiment of the present invention;
FIG. 3 is a flowchart of a policy control method according to a second embodiment of the present invention;
FIG. 4 is a flowchart of a policy control method according to a third embodiment of the present invention;
FIG. 5 is a flowchart of a policy control method according to a fourth embodiment of the present invention;
FIG. 6 shows a structure of a policy control apparatus according to a fifth embodiment of the present invention;
FIG. 7 shows a logical structure of an obtaining module according to the fifth embodiment of the present invention;
FIG. 8 shows a logical structure of a calculation storing module according to the fifth embodiment of the present invention;
FIG. 9 shows a logical structure of a deciding module according to the fifth embodiment of the present invention; and
FIG. 10 shows a structure of another policy control apparatus according to a sixth embodiment of the present invention.

### DETAILED DESCRIPTION OF THE EMBODIMENTS

The following detailed description is provided with reference to the accompanying drawings to provide an understanding of the present invention. Evidently, the drawings and the detailed description are merely representative of particular embodiments of the present invention, and the embodiments are illustrative in nature and not exhaustive. All other embodiments, which can be derived by a person skilled in the art from the embodiments provided herein without any creative effort, shall fall within the protection scope of the present invention.

### Embodiment 1

FIG. 2 is a flowchart of a policy control method according to a first embodiment of the present invention. As shown in FIG. 2, the method may include the following steps:
Step 201: Obtain current service usage information of a user.

Without changing the PCC architecture of the existing 3GPP R7 system, the current service usage information of the user may be obtained in many ways. For example, the Gx interface between the PCRF and the PCEF is extended so that the Gx interface can report the current service usage information (such as traffic and/or duration) of the user to the PCRF; or, a query interface is defined between the PCRF and the OCS and/or OFCS, and the current service usage information of the user is obtained by querying the OCS and/OFCS.

Step 202: Add the current service usage information of the user and history service usage information of the user up to obtain current history service usage information of the user, and store the current history service usage information.

The history service usage information of the user may be stored in the PCRF of the PCC architecture, or in another external network element. For example, when a PCEF accesses more than one PCRF, the history service usage information of the user needs to be stored on a public external network element such as an SPR, which helps more than one PCRF to obtain the history service usage information of the user.

Step 203: Make a policy decision according to the current history service usage information of the user.

The policy mentioned in this embodiment includes a QoS policy, routing policy and charging policy. The step of deciding a policy according to the stored history service usage information of the user may be as follows:

Judge whether the traffic and/or duration in the current history service usage information of the user fulfills a policy decision condition; if so, the PCRF makes a policy decision according to a local policy or a policy obtained from an external network element such as the SPR; otherwise, no policy decision is made.

It should be noted that in this embodiment and subsequent embodiments, the term "policy decision" refers to selecting a policy. For example, an operator may provide various personalized policies (such as a ring back tone and an expense grade) for the user, and store the policies in a PCRF or on an external network element such as the SPR. If the PCRF determines that the traffic and/or duration in the current history service usage information of the user fulfills a policy decision condition, the PCRF decides a policy according to a policy stored locally or a policy obtained from an external network element such as the SPR.

Specifically, the PCRF selects a proper policy among obtained policies according to the current history service usage information of the user.

For example, multiple policies obtained by the PCRF are QoS1, QoS2, and QoS3; the threshold of QoS1 is 10 MB, and the decision condition is that the QoS is less than 10 MB; the thresholds of QoS2 are 10 MB and 20 MB, and the decision condition is that the QoS is greater than 10 MB and less than 20 MB; the threshold of QoS3 is 20 MB, and the decision condition is that the QoS is greater than 20 MB.

If the traffic in the current history service usage information of the user is less than 10 MB, the PCRF selects QoS1.

If the traffic in the current history service usage information of the user is 10 MB to 20 MB, the PCRF selects QoS2.

If the traffic in the current history service usage information of the user is greater than 20 MB, the PCRF selects QoS3.

In this embodiment, the current service usage information of the user is added with the history service usage information of the user to obtain an calculation result, and the authorized policy is decided according to the calculation result. Therefore, a policy is controlled according to the history service usage of the user without changing the network architecture, the network resources are utilized efficiently, and differentiated services are provided for the user.

### Embodiment 2

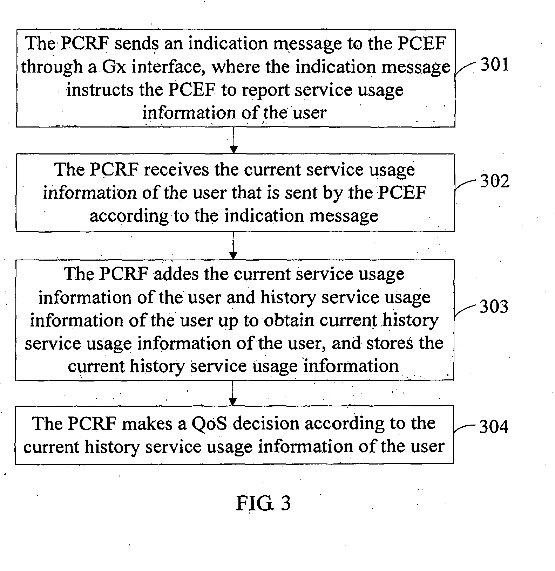

FIG. 3 is a flowchart of a policy control method according to a second embodiment of the present invention. The QoS policy is taken as an example below for describing the policy control process in this embodiment. As shown in FIG. 3, the method may include the following steps:

Step 301: The PCRF sends an indication message to the PCEF through a Gx interface. The indication message instructs the PCEF to report service usage information of the user.

Table 1 shows a part of the content of the indication message. The indication message carries these information elements: "reporting required", "reporting mode", and "reporting interval".

As shown in Table 1, "reporting required" indicates whether the PCEF needs to report the service usage information of the user; if the value of this information element is "yes", the PCEF needs to report the service usage information of the user; if the value of this information element is "no", the PCEF does not need to report the service usage information of the user.

As shown in Table 1, "reporting mode" indicates how the PCEF reports the service usage information of the user; "reporting mode" is enabled when the value of "reporting required" is "yes", and is disabled when the value of "reporting required" is "no"; the PCEF may report the service usage information of the user in this mode: reporting by context, reporting by tariff group, or reporting by tariff group and service ID. For example, the PCEF may report the traffic and/or duration of all current services, or report the traffic and/or duration of a specific service.

**Table 1**

| **Information Element** | **Format** | **Description** |
|---|---|---|
| Reporting required | unsigned char | This information element indicates whether the PCEF needs to report the service usage information of the user; the value "yes" indicates need of reporting; and the value "no" indicates no need of reporting. |
| Reporting mode | unsigned char | Reporting by context, or reporting by tariff group, or reporting by tariff group and service ID; enabled only when the service usage information of the user needs to be reported. |
| Reporting interval | unsigned long | Interval of reporting the service usage information by the PCEF, namely, reporting at an interval of traffic (kb) and/or time (s); enabled only when the service usage information of the user needs to be reported. |

As shown in Table 1, "reporting interval" indicates the interval of reporting the service usage information in the mode specified by "reporting mode". The PCEF may report the service usage information at an interval of traffic only, for example, report the service usage information once the traffic increases by 10 KB or 15 KB or 20 KB in the mode specified by "reporting mode"; or report the service usage information at an interval of time only, for example, report the service usage information once the time increases by 10s or 15s or 20s in the mode specified by "reporting mode"; or report the service usage information at an interval of both traffic and time, for example, report the service usage information in the mode specified by "reporting mode" when the traffic increases to a certain extent and the time increases to a certain extent.

It should be noted that the indication message sent by the PCRF may carry only the "reporting required" information element, and this information element is set to "yes", which indicates that the PCEF needs to report the current service usage information of the user; the indication message does not need to carry "reporting mode" or "reporting interval" because the reporting mode and the reporting interval as shown in Table 1 may be preset in the PCEF; after receiving an indication message, the PCEF may report the service usage information of the user according to the reporting mode and reporting interval that are preset locally.

It should be noted that a part of the message content in Table 1 provided by the embodiment of the present invention may be new content carried in a reserved field of an existing message transmitted through a Gx interface to the PCEF, or may be a part of content carried in a newly defined message transmitted through a Gx interface to the PCEF, to which the embodiment of the present invention does not limit.

Step 302: The PCRF receives the current service usage information of the user that is sent by the PCEF according to the indication message.

In the reported content shown in Table 2, the reporting mode carried in the reported content corresponds to the reporting mode shown in Table 1. For example, if the reporting mode in Table 1 is "reporting by context", the "PDP context" information element needs to be selected in the reported content shown in Table 2; if the reporting mode in Table 1 is "reporting by tariff group", the "tariff group" information element needs to be selected in the reported content shown in Table 2; if the reporting mode in Table 1 is "reporting according to tariff group and service ID", the "tariff group" information element and the "service ID" information element need to be selected in the reported content shown in Table 2.

**Table 2**

| **Information Element** | **Format** | **Description** |
|---|---|---|
| PDP context | unsigned long | Context ID, optional; applicable when the PCEF reports the service usage information based on context. |
| Tariff group | unsigned long | Tariff ID, optional; applicable when the PCEF reports the service usage information based on the tariff group. |
| Service ID | unsigned long | Service ID, optional; applicable when the PCEF reports the service usage information based on the tariff group and the service ID. |
| Number of uplink packets | unsigned long | Number of uplink packets forwarded. |
| Number of downlink packets | unsigned long | Number of downlink packets forwarded. |
| Number of uplink KB | unsigned long | Number of uplink KB forwarded. |
| Number of downlink KB | unsigned long | Number of downlink KB forwarded. |
| Service duration | unsigned long | Service duration. |

It should be noted that the reported content in Table 2 provided by the embodiment of the present invention may be new content carried in a reserved field of an existing message transmitted through a Gx interface to the PCRF, or may be a part of content carried in a newly defined message transmitted through a Gx interface to the PCRF, to which the embodiment of the present invention does not limit.

Step 303: The PCRF adds the current service usage information of the user and history service usage information of the user up to obtain current history service usage information of the user, and stores the current history service usage information.

The PCRF may add the current service usage information of the user and the history service usage information stored in the PCRF up to obtain current history service usage information of the user, and store the current history service usage information.

Alternatively, the PCRF stores the current history service usage information on an external network element. For example, when one PCEF accesses more than one PCRF, the PCRF may add the current service usage information of the user and the history service usage information stored in the SPR up to obtain current history service usage information of the user, and store the current history service usage information in the SPR. In this way, more than one PCRF can obtain the history service usage information of the user conveniently.

Moreover, the period of calculating the history service usage information of the user can be set in this embodiment. For example, the first day to the last day of every month form an calculation period, and calculated history service information of the user is valid only in this calculation period. Upon expiry of the calculation period, the calculated history service usage information of the user is cleared to zero. The calculation period is decided at the operator's discretion.

Step 304: The PCRF makes the QoS decision according to the current history service usage information of the user.

The step of deciding the QoS according to the current history service usage information of the user may be as follows:

Judge whether the traffic and/or duration in the current history service usage information of the user fulfills a QoS decision condition; if so, the PCRF makes a QoS decision according to the local policy or the policy obtained from the SPR; otherwise, the PCRF makes no QoS decision.

Specifically, a threshold may be preset. If it is determined that the traffic and/or duration in the current history service usage information of the user is greater than or equal to the preset threshold, it is deemed that the traffic and/or duration of the history service usage information of the user fulfills the QoS decision condition, and the PCRF makes a QoS decision according to a local policy or a policy obtained from the SPR.

For example, if the history service usage information of the user is traffic only, a traffic threshold may be preset. If the history service usage information of the user is greater than or equal to the preset traffic threshold, the PCRF makes a QoS decision according to a local policy or a policy obtained from the SPR. If a traffic threshold preset by the user is 20 MB, after the current history service usage information of the user reaches 20 MB, the PCRF obtains a policy of lower QoS and controls the user according to this policy to reduce the traffic of the user and prevent the user from abusing network resources. In this way, the network resources are used more efficiently.

For example, if the history service usage information of the user is duration only, a duration threshold may be preset. If the duration of using the service is greater than or equal to the preset duration threshold, the PCRF makes a QoS decision according to a local policy or a policy obtained from the SPR. If a duration threshold preset by the user is 50 hours, after the user has used the service for 50 hours, the PCRF obtains a policy of a lower tariff, controls the charging for the user according to this policy, thus reducing the tariff for the user and encouraging use of the service.

If the history service usage information of the user is both traffic and duration, a traffic threshold and a duration threshold may be preset. If the PCRF determines that the traffic and/or duration in the history service usage information of the user is greater than or equal to the preset threshold, the PCRF makes a QoS decision according to a local policy or a policy obtained from the SPR.

A threshold may be preset in this embodiment. If the PCRF determines that the traffic and/or duration in the current history service usage information of the user is less than the preset threshold, it is deemed that the traffic and/or duration of the history service usage information of the user fulfills the QoS decision condition, and the PCRF makes a QoS decision according to a local policy or a policy obtained from the SPR. For example, at the beginning of network construction, the user quantity is low. When the user traffic is lower than the threshold, higher QoS may be assigned to the user so that the user can have a better experience of the service and use the network resources more efficiently.

After deciding QoS according to the history service usage information of the user, the PCRF may send authorized QoS to the PCEF through a Gx interface, and the PCEF sends the authorized QoS to the UE. The process of sending the authorized QoS to the PCEF through the Gx interface and then sending the authorized QoS from the PCEF to the UE is based on the prior art, and is not detailed here further.

If the PCRF supports a Remote Authentication Dial-In User Service (RADIUS) interface, the PCEF may report the service usage information of the user to the PCRF through a RADIUS charging protocol, and then the PCRF adds the service usage information of the user and the history service usage information stored in the PCRF or in an external network element up to obtain current history service usage information of the user, and stores the current history service usage information and makes a QoS decision. The decided QoS may be sent to the PCEF through a Gx interface, and sent by the PCEF to the UE. However, the user service usage information reported through the RADIUS interface can be reported only in PDP context mode, and cannot be reported based on the tariff group, or reported based on the tariff group and the service ID.

Detailed above is a policy control method in the second embodiment of the present invention. The method in this embodiment adds the current service usage information of the user and the history service usage information of the user up to obtain an calculation result, and decides the authorized QoS according to the calculation result. Therefore, the QoS is controlled according to the history service usage of the user without changing the network architecture, the network resources are utilized efficiently, and differentiated services are provided for the user.

In another embodiment of the present invention, information may be preset on the PCEF. The preset information instructs the PCEF to report the service usage information of the user, and the PCRF does not need to deliver indication information to the PCEF.

### Embodiment 3

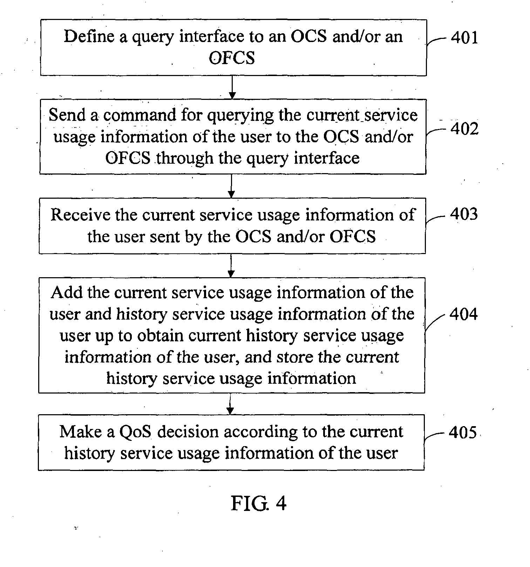

FIG. 4 is a flowchart of a policy control method according to a third embodiment of the present invention. This embodiment provides details about the process of QoS control in PCC architecture, assuming that the PCC architecture is applied to charging control. It should be noted that the charging control in this embodiment includes online charging control and offline charging control. The method may include the following steps:

Step 401: Define a query interface to an OCS and/or an OFCS.

When the PCC architecture is applied to the online charging, the PCEF may receive indication information sent by the PCRF, and the indication information instructs the PCEF to send the service usage information of the user to the OCS. When the PCC architecture is applied to the offline charging, the PCEF may receive indication information sent by the PCRF, and the indication information instructs the PCEF to send the service usage information of the user to the OFCS. Therefore, the current service usage information of the user exists on both the OCS and the OFCS.

Therefore, a query interface may be defined between the PCRF and the OCS, and between the PCRF and the OFCS. Through the query interface, the service usage information of the user is obtained from the OCS and/or OFCS.

Step 402: Send a command for querying the current service usage information of the user to the OCS and/or OFCS through the query interface.

The command for querying the current service usage information of the user may indicate how the OCS and/or OFCS reports the service usage information of the user, namely, indicate a reporting mode. The reporting mode may be: reporting by context, reporting by tariff group, or reporting by tariff group and service ID.

Step 403: Receive the current service usage information of the user that is sent by the OCS and/or OFCS.

The current service usage information of the user sent by the OCS and/or OFCS may be the traffic and/or duration of the current service usage of the user.

Step 404: Add the current service usage information of the user and history service usage information of the user up to obtain current history service usage information of the user, and store the current history service usage information.

The PCRF may add the current service usage information of the user and the history service usage information stored in the PCRF up to obtain current history service usage information of the user, and store the current history service usage information.

Alternatively, the PCRF may add the current service usage information of the user and the history service usage information stored on an external network element up to obtain current history service usage information of the user, and store the current history service usage information. When one PCEF accesses more than one PCRF, the PCRF may add the current service usage information of the user and the history service usage information stored in the SPR up to obtain current history service usage information of the user, and store the current history service usage information in the SPR. In this way, more than one PCRF can obtain the history service usage information of the user conveniently.

Step 405: Make a QoS decision according to the current history service usage information of the user.

The step of deciding the QoS according to the current history service usage information of the user has been described in the second embodiment above.

Detailed above is a policy control method in the third embodiment of the present invention. In this embodiment, a query interface may be defined between the PCRF and the OCS/OFCS; through the query interface, the current service usage information of the user is obtained from the OCS and/or OFCS; the current service usage information of the user is added with the history service usage information of the user to obtain an calculation result, and the authorized QoS is decided according to the calculation result. Therefore, the QoS is controlled according to the history service usage of the user without changing the network architecture, the network resources are utilized efficiently, and differentiated services are provided for the user.

In another embodiment of the present invention, information may be preset on the PCEF. The preset information instructs the PCEF to send the service usage information of the user to the OCS, and the PCRF does not need to deliver indication information to the PCEF.

### Embodiment 4

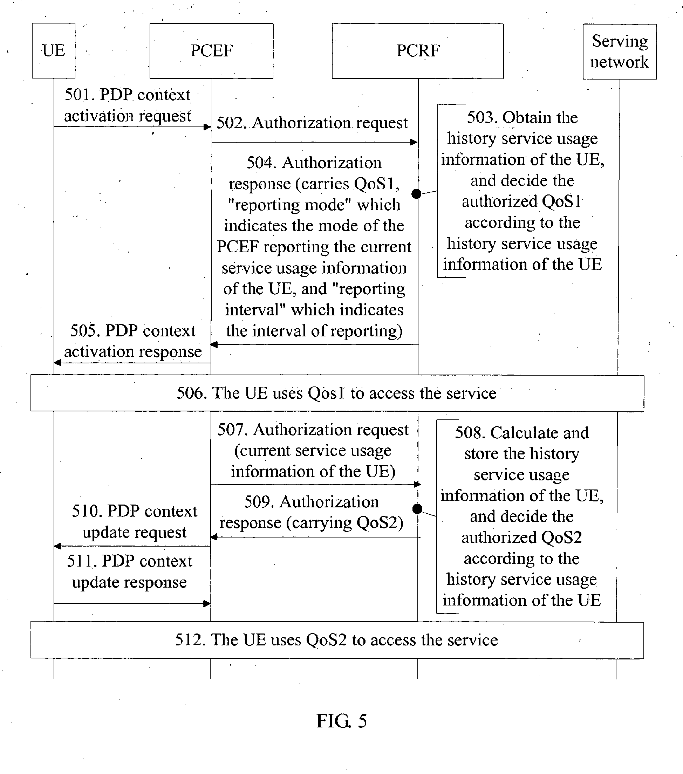

FIG. 5 is a flowchart of a policy control method according to a fourth embodiment of the present invention. The QoS policy is taken as an example below for describing the policy control method in this embodiment. As shown in FIG. 5, the method may include the following steps:

Step 501: The UE sends a PDP context activation request to the PCEF.

When the UE needs to access a service, the UE needs to send a PDP context activation request to the PCEF..

Step 502: The PCEF sends an authorization request to the PCRF.

After receiving the PDP context activation request from the UE, the PCEF sends an authorization request to the PCRF.

Step 503: The PCRF obtains history service usage information of the UE, and decides authorized QoS 1 according to the history service usage information of the UE.

The PCRF obtains the history service usage information of the UE from the history service usage information stored in the PCRF, or obtains the history service usage information of the UE from the history service usage information stored in an external network element such as an SPR.

After obtaining the history service usage information of the UE, the PCRF makes a QoS1 decision according to a local policy or a policy obtained from the SPR. It should be noted that the specific QoS decided according to the history service usage information may be developed by an operator or depends on the subscription by the UE.

Step 504: The PCRF sends an authorization response to the PCEF. The authorization response carries the authorized QoS1 decided by the PCRF, instructs the PCEF to report the service usage information of the UE, and indicates a reporting mode and a reporting interval.

In this embodiment, the reporting mode indicated in the authorization response is a PDP context mode; and the authorization response instructs the PCEF to report the service usage information of the UE to the PCRF in PDP context mode.

Step 505: The PCEF sends a PDP context activation response to the UE. The response carries the QoS1 authorized by the PCRF.

Step 506: The UE accesses the service according to the QoS1 authorized by the PCRF.

Step 507: When the UE accesses the service according to the QoS1 authorized by the PCRF, the PCEF reports the current service usage information of the UE to the PCRF in PDP context mode.

Step 508: The PCRF may add the current service usage information reported by the PCEF in PDP context mode and the history service usage information stored in the PCRF up to obtain current history service usage information of the UE, and store the current history service usage information.

Alternatively, the PCRF may add the current service usage information of the UE and the history service usage information stored on an external network element up to obtain current history service usage information of the UE, and store the current history service usage information. For example, if one PCEF accesses more than one PCRF, the PCRF may add the current service usage information reported by the PCEF in PDP context mode and the history service usage information stored in an external network element such as the SPR up to obtain current history service usage information of the UE, and store the current history service usage information in the SPR.

The PCRF judges whether the traffic and/or duration in the current history service usage information of the UE fulfills a QoS decision condition; if so, the PCRF decides the authorized QoS2 according to the local policy or the policy obtained from the SPR; if not, no more subsequent step is required, and the UE still accesses the service according to QoS 1.

Step 509: The PCRF sends an authorization response to the PCEF. The authorization response carries the authorized QoS2 decided by the PCRF.

Step 510: The PCEF sends a PDP context update request to the UE. The request carries the authorized QoS2 decided by the PCRF.

Step 511: After receiving the PDP context update request sent by the PCEF, the UE obtains the authorized QoS2 decided by the PCRF.

Step 512: The UE accesses the service according to the QoS2 authorized by the PCRF.

Detailed above is a policy control method in the fourth embodiment of the present invention. The method in this embodiment adds the current service usage information of the UE and the history service usage information of the UE to obtain an calculation result, and decides the authorized QoS according to the calculation result. Therefore, the QoS is controlled according to the history service usage of the UE without changing the network architecture, the network resources are utilized efficiently, and differentiated services are provided for the user.

### Embodiment 5

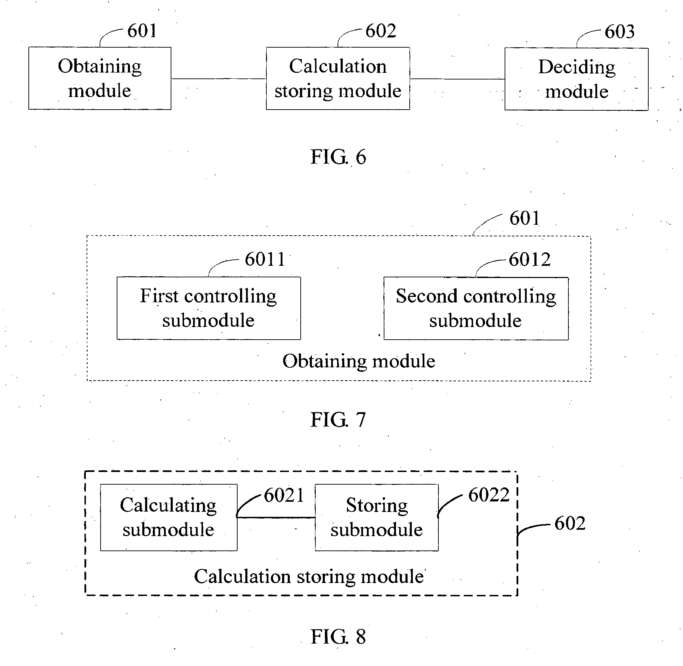

FIG. 6 shows a structure of a policy control apparatus according to a fifth embodiment of the present invention. The policy control apparatus in this embodiment may be a stand-alone apparatus applied in the PCC architecture of the 3GPP R7 system to control a policy, or serve as a part of the PCRF in the PCC architecture to control a policy. As shown in FIG. 6, the apparatus may include an obtaining module 601, a calculation storing module 602, and a deciding module 603.

The obtaining module 601 is adapted to obtain current service usage information of a user.

Without changing the PCC architecture of the existing 3GPP R7 system, the obtaining module 601 may obtain the current service usage information of the user in many ways. For example, the Gx interface between the PCRF and the PCEF is extended to obtain the current service usage information (such as traffic and/or duration) reported by the PCEF; or, through a RADIUS interface, the PCRF receives the current service usage information of the user, which is reported by the PCEF through a RADIUS charging protocol; or, a query interface is defined between the PCRF and the OCS, and between the PCRF and the OFCS, and, through the query interface, the PCRF obtains the current service usage information of the user from the OCS and/or OFCS. However, if the last mode is applied to obtain the current service usage information, the PCRF needs to send an indication message to the PCEF first. The indication message instructs the PCEF to send the current service usage information of the user to the OCS and/or OFCS. Afterward, the PCRF sends a command for querying the current service usage information of the user to the OCS and/or OFCS through the defined query interface to obtain the current service usage information of the user.

The calculation storing module 602 is adapted to add the current service usage information of the user obtained by the obtaining module 601 and history service usage information of the user up to obtain current history service usage information of the user, and store the current history service usage information.

The history service usage information of the user may be stored in a PCRF in the PCC architecture, or on an external network element. For example, when a PCEF accesses more than one PCRF, the history service usage information of the user needs to be stored on a public external network element such as the SPR, which helps more than one PCRF to obtain the history service usage information of the user.

The deciding module 603 is adapted to make a policy decision according to the current history service usage information of the user.

The current service usage information of the user may be the traffic and/or duration of the history service usage of the user; and the policy includes a QoS policy, routing policy and charging policy.

The deciding module 603 may make the policy decision according to the current history service usage information of the user in the following way:

The deciding module 603 judges whether the traffic and/or duration in the current history service usage information of the user fulfills a policy decision condition; if so, the deciding module 603 makes a policy decision according to a local policy or a policy obtained from an external network element such as an SPR; otherwise, no policy decision is made.

FIG. 7 shows a logical structure of an obtaining module according to a fifth embodiment of the present invention. The obtaining module 601 may include:
a first controlling submodule 6011, adapted to send an indication message to the PCEF, where the indication message instructs the PCEF to report service usage information of the user; and
a second controlling submodule 6012, adapted to receive the current service usage information of the user that is sent by the PCEF according to the indication message.

The indication message may further carry information such as "reporting mode" indicating the mode of the PCEF reporting the current service usage information of the user, "reporting interval" indicating the interval of reporting the service usage information. The "reporting mode" may include: reporting by PDP context, or reporting by tariff group, or reporting by tariff group and service ID. The "reporting interval" may be: reporting at an interval of traffic, or reporting at an interval of duration.

The second controlling submodule 6012 may receive the current service usage information of the user through a Gx interface, where the current service usage information is sent by the PCEF according to the indication message.

Alternatively, through a RADIUS interface, the second controlling submodule 6012 receives the current service usage information of the user, which is reported by the PCEF through the RADIUS charging protocol.

In addition, the first controlling submodule 6011 is further adapted to: send an indication message to the PCEF, where the indication message instructs the PCEF to send the current service usage information of the user to the OCS and/or OFCS; and then send a command for querying the current service usage information of the user to the OCS and/or OFCS.

The second controlling submodule 6012 may be adapted to receive the current service usage information of the user that is sent by the OCS and/or OFCS.

A query interface may be defined between the second controlling submodule 6012 and the OCS and/or between the second controlling submodule 6012 and the OFCS. Through the query interface, the PCRF sends a command for querying the current service usage information of the user to the OCS and/or OFCS, and receives the current service usage information of the user sent by the OCS and/or OFCS.

FIG. 8 shows a logical structure of a calculation storing module according to the fifth embodiment of the present invention. The calculation storing module 602 may include:
a calculating submodule 6021, adapted to add current service usage information of a user and history service usage information stored in a PCRF; and
a storing submodule 6022, adapted to store an calculation result obtained by the calculating submodule into the PCRF as current history service usage information of the user.

Alternatively, the calculating submodule 6021 is adapted to add the current service usage information of the user and history service usage information stored in an SPR; and

The storing submodule 6022 is adapted to store the calculation result obtained by the calculating submodule into the SPR as current history service usage information of the user.

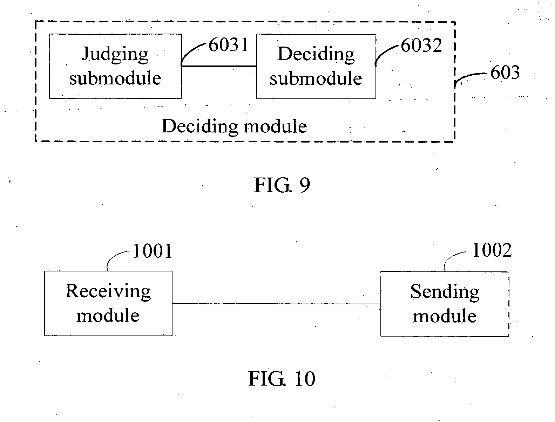

FIG. 9 shows a logical structure of a deciding module according to the fifth embodiment of the present invention. The deciding module 603 may include:
a judging submodule 6031, adapted to judge whether traffic and/or duration in current history service usage information of a user fulfills a policy decision condition; and
a deciding submodule 6032, adapted to make a policy decision according to a local policy or a policy obtained from an external network element if the judging submodule 6031 determines that the traffic and/or duration fulfills the policy decision condition.

Specifically, a threshold may be preset. If the judging submodule 6031 determines that the traffic and/or duration in the current history service usage information of the user is greater than or equal to the preset threshold, it is deemed that the traffic and/or duration of the history service usage information of the user fulfills the policy decision condition; and the deciding submodule 6032 makes a policy decision according to the local policy of the PCRF or the policy obtained from the SPR.

A threshold may be preset. If the PCRF determines that the traffic and/or duration in the current history service usage information of the user is less than the preset threshold, it is deemed that the traffic and/or duration of the history service usage information of the user fulfills the QoS decision condition, and the PCRF makes a QoS decision according to a local policy or a policy obtained from the SPR.

Detailed above is a policy control apparatus in the fifth embodiment of the present invention. The apparatus in this embodiment addes the current service usage information of the user and the history service usage information of the user up to obtain an calculation result, and makes the authorized policy decision according to the calculation result. Therefore, the policy is controlled according to the history service usage of the user without changing the network architecture, the network resources are utilized efficiently, and differentiated services are provided for the user.

### Embodiment 6

FIG. 10 shows a structure of another policy control apparatus according to a sixth embodiment of the present invention. The policy control apparatus in this embodiment may be a stand-alone apparatus applied in PCC architecture of the 3GPP R7 system to control a policy, or serve as a part of the PCEF in the PCC architecture to control a policy. As shown in FIG. 10, the apparatus may include:
a receiving module 1001, adapted to receive an indication message sent by a PCRF, where the indication message is an instruction for reporting service usage information of a user; and
a sending module 1002, adapted to report current service usage information of the user to the PCRF according to the indication message.

Specifically, the sending module 1002 is adapted to report current service usage information of the user to the PCRF through a Gx interface according to the indication message.

Alternatively, the sending module is adapted to report current service usage information of the user to the PCRF through a RADIUS interface based on a RADIUS charging protocol according to the indication message.

When the PCC architecture is applied to charging control, the receiving module 1001 is also adapted to receive an indication message sent by the PCRF, where the indication message is an instruction for sending the current service usage information of the user to the OCS and/or OFCS; and

The sending module 1002 is adapted to send the current service usage information of the user to the OCS and/or OFCS. In this way, a query interface may be defined between the PCRF and the OCS, and/or between the PCRF and the OFCS, and, through the query interface, the PCRF sends a command for querying the current service usage information to the OCS and/or OFCS, and receives the current service usage information sent by the PCEF in the OCS and/or OFCS.

The policy control apparatus provided in the sixth embodiment of the present invention may work with the PCRF, and therefore, the PCRF addes the current service usage information of the user and the history service usage information of the user up to obtain an calculation result, and makes an authorized policy decision according to the calculation result. The policy is controlled according to the history service usage of the user without changing the network architecture, the network resources are utilized efficiently, and differentiated services are provided for the user.

A person skilled in the art should understand that all or part of the steps of the method according to the embodiments of the present invention may be implemented by a program instructing relevant hardware. The program may be stored in a computer readable storage medium. When the program runs, the steps of the method according to the embodiments of the present invention are performed. The storage medium may be any medium that is capable of storing program codes, such as a Read Only Memory (ROM), a Random Access Memory (RAM), a magnetic disk, or a Compact Disk-Read Only Memory (CD-ROM).

Described above are a policy control method and apparatus under the present invention. Although the invention is described through some exemplary embodiments, the invention is not limited to such embodiments. It is apparent that those skilled in the art can make modifications and variations to the invention without departing from the protection scope of the invention. The invention is intended to cover the modifications and variations provided that they fall within the scope of protection defined by the following claims or their equivalents.

## Claims

1. A policy control method, comprising:
obtaining (201), by a Policy and Charging Rules Function, PCRF, current service usage information of a user;
adding up (202), by the PCRF, the current service usage information of the user and history service usage information of the user which is stored in a Subscription Profile Repository, SPR, to obtain current history service usage information of the user,
storing, by the PCRF, the current history service usage information in the SPR; and
making (203), by the PCRF, a policy decision according to the current history service usage information of the user.

2. The method according to claim 1, wherein the obtaining the current service usage information of the user is:
sending an indication message to a Policy and Charging Enforcement Function, PCEF, wherein the indication message instructs the PCEF to report service usage information of the user; and
receiving the current service usage information of the user that is sent by the PCEF according to the indication message.

3. The method according to claim 2, wherein:
the receiving the current service usage information of the user that is sent by the PCEF according to the indication message is:
through a Gx interface, receiving the current service usage information of the user that is sent by the PCEF according to the indication message.

4. The method according to claim 2, wherein:
the receiving the current service usage information of the user that is sent by the PCEF according to the indication message is:
through a Remote Authentication Dial-In User Service, RADIUS, interface, receiving the current service usage information of the user that is sent by the PCEF in RADIUS charging protocol mode.

5. The method according to any one of claims 2-4, wherein:
the indication message further indicates a reporting mode and/or a reporting interval for the PCEF to report the current service usage information.

6. The method according to one of the claims 1 to 5, wherein the obtaining the current service usage information of the user is:
sending an indication message to a Policy and Charging Enforcement Function, PCEF, wherein the indication message instructs the PCEF to report the current service usage information of the user to an Online Charging System, OCS, and/or an Offline Charging System, OFCS;
sending a command for querying the current service usage information of the user to the OCS and/or OFCS; and
receiving the current service usage information of the user sent by the OCS and/or OFCS.

7. The method according to one of the claims 1 to 6, wherein:
the history service usage information of the user is traffic and/or duration of history service usage of the user.

8. The method according to claim 7, wherein:
the making the policy decision according to the current history service usage information of the user is:
if the traffic and/or duration in the current history service usage information of the user fulfills a policy decision condition, the policy decision is made according to a local policy or a policy obtained from an external network element.

9. The method according to one of the claims 1 to 8, wherein:
the policy is a Quality of Service, QoS, policy, or routing policy, or charging policy.

10. A policy control apparatus, comprising:
an obtaining module(601), adapted to obtain current service usage information of a user;
a calculation storing module(602), adapted to add up the current service usage information of the user obtained by the obtaining module(601) and history service usage information of the user to obtain current history service usage information of the user, and store the current history service usage information; wherein the calculation storing module (602) comprises: a calculating submodule (6021), adapted to add up the current service usage information of the user and history service usage information stored in a Subscription Profile Repository, SPR; and a storing submodule (6022), adapted to store the calculation result obtained by the calculating submodule (6021) into the SPR as current history service usage information of the user; and
a deciding module (603), adapted to make a policy decision according to the current history service usage information of the user.

## Patentansprüche

1. "Policy Control"-Verfahren, das umfasst:
Erhalten (201), durch eine "Policy and Charging Rules"-Funktion, PCRF, von aktuellen Dienstenutzungsinformationen eines Nutzers;
Aufaddieren (202), durch die PCRF, der aktuellen Dienstenutzungsinformationen des Nutzers und der historischen Dienstenutzungsinformationen des Nutzers, die in einem Subskriptionsprofil-Repositorium, SPR, gespeichert sind, um aktuelle historische Dienstenutzungsinformationen des Nutzers zu erhalten, Speichern, durch die PCRF, der aktuellen historischen Dienstenutzungsinformationen in dem SPR; und
Fällen (203), durch die PCRF, einer "Policy"-Entscheidung gemäß den aktuellen historischen Dienstenutzungsinformationen des Nutzers.

2. Verfahren nach Anspruch 1, wobei das Erhalten der aktuellen Dienstenutzungsinformationen des Nutzers bedeutet:
Senden einer Hinweisnachricht an eine "Policy and Charging Enforcement"-Funktion, PCEF, wobei die Hinweisnachricht die PCEF anweist, Dienstenutzungsinformationen des Nutzers zu berichten; und
Empfangen der aktuellen Dienstenutzungsinformationen des Nutzers, die gemäß der Hinweisnachricht durch die PCEF gesendet werden.

3. Verfahren nach Anspruch 2, wobei:
das Empfangen der aktuellen Dienstenutzungsinformationen des Nutzers, die gemäß der Hinweisnachricht durch die PCEF gesendet werden, bedeutet:
Empfangen der aktuellen Dienstenutzungsinformationen des Nutzers, die gemäß der Hinweisnachricht durch die PCEF gesendet werden, durch eine Gx-Schnittstelle.

4. Verfahren nach Anspruch 2, wobei:
das Empfangen der aktuellen Dienstenutzungsinformationen des Nutzers, die gemäß der Hinweisnachricht durch die PCEF gesendet werden, bedeutet:
Empfangen der aktuellen Dienstenutzungsinformationen des Nutzers, die durch die PCEF gesendet werden, durch eine "Remote Authentication Dial-In User Service"-Schnittstelle, RADIUS-Schnittstelle, in einem RADIUS-Verrechnungsprotokollmodus.

5. Verfahren nach einem der Ansprüche 2 - 4, wobei:
die Hinweisnachricht ferner auf einen Berichtsmodus und/oder auf ein Berichtsintervall für die PCEF, die aktuellen Dienstenutzungsinformationen zu berichten, hinweist.

6. Verfahren nach einem der Ansprüche 1 bis 5, wobei das Erhalten der aktuellen Dienstenutzungsinformationen des Nutzers bedeutet:
Senden einer Hinweisnachricht an eine "Policy and Charging Enforcement"-Funktion, PCEF, wobei die Hinweisnachricht die PCEF anweist, die aktuellen Dienstenutzungsinformationen des Nutzers an ein Online-Verrechnungssystem (Online Charging System, OCS) und/oder ein Offline-Verrechnungssystem (Offline Charging System, OFCS) zu berichten;
Senden eines Befehls zum Anfragen der aktuellen Dienstenutzungsinformationen des Nutzers an das OCS und/oder das OFCS; und
Empfangen der aktuellen Dienstenutzungsinformationen des Nutzers, die durch das OCS und/oder das OFCS gesendet werden.

7. Verfahren nach einem der Ansprüche 1 bis 6, wobei:
die historischen Dienstenutzungsinformationen des Nutzers Verkehr und/oder Dauer von historischer Dienstenutzung des Nutzers sind.

8. Verfahren nach Anspruch 7, wobei:
das Fällen der "Policy"-Entscheidung gemäß den aktuellen historischen Dienstenutzungsinformationen des Nutzers bedeutet:
falls der Verkehr und oder die Dauer in den aktuellen historischen Dienstenutzungsinformationen des Nutzers eine "Policy"-Entscheidungsbedingung erfüllt, wird die "Policy"-Entscheidung gemäß einer lokalen "Policy" oder einer von einem externen Netzelement erhaltenen "Policy" gefällt.

9. Verfahren nach einem der Ansprüche 1 bis 8, wobei:
die "Policy" eine Dienstequalität-"Policy" (Quality of Service policy, QoS-"Policy") oder eine Routen-"Policy" oder eine Verrechnungs-"Policy" ist.

10. "Policy Control"-Vorrichtung, die umfasst:
ein Erhaltemodul (601), das dafür ausgelegt ist, aktuelle Dienstenutzungsinformationen eines Nutzers zu erhalten;
ein Berechnungsspeichermodul (602), das dafür ausgelegt ist, die aktuellen Dienstenutzungsinformationen des Nutzers, die von dem Erhaltemodul (601) erhalten werden, und die historischen Dienstenutzungsinformationen des Nutzers aufzuaddieren, um aktuelle historische Dienstenutzungsinformationen des Nutzers zu erhalten und die aktuellen historischen Dienstenutzungsinformationen zu speichern;
wobei das Berechnungsspeichermodul (602) umfasst: ein Berechnungs-Submodul (6021), das dafür ausgelegt ist, die aktuellen Dienstenutzungsinformationen des Nutzers und die historischen Dienstenutzungsinformationen, die in einem Subskriptionsprofil-Repositorium bzw. SPR gespeichert sind, aufzuaddieren; und ein Speicher-Submodul (6022), das dafür ausgelegt ist, das Berechnungsergebnis, das von dem Berechnungs-Submodul (6021) erhalten wurde, als aktuelle historische Dienstenutzungsinformationen des Nutzers in dem SPR zu speichern; und
ein Enscheidungsmodul (603), das dafür ausgelegt ist, eine "Policy"-Entscheidung gemäß den aktuellen historischen Dienstenutzungsinformationen des Nutzers zu fällen.

## Revendications

1. Procédé de commande de stratégie, comprenant :
l'obtention (201), par une fonction de stratégies et de règles de facturation, PCRF, d'informations d'utilisation de service courantes d'un utilisateur ;
l'addition (202), par la PCRF, des informations d'utilisation de service courantes de l'utilisateur et d'informations d'historique d'utilisation de service de l'utilisateur qui sont mémorisées dans un gisement de profil d'abonnement, SPR, pour obtenir des informations d'historique d'utilisation de service courantes de l'utilisateur,
la mémorisation, par la PCRF, des informations d'historique d'utilisation de service courantes de l'utilisateur dans le SPR ; et
la prise (203), par la PCRF, d'une décision de stratégie en fonction des informations d'historique d'utilisation de service courantes de l'utilisateur.

2. Procédé selon la revendication 1, dans lequel l'obtention des informations d'utilisation de service courantes de l'utilisateur consiste à :
envoyer un message d'indication à une fonction de mise en vigueur de stratégies et de facturation, PCEF, le message d'indication instruisant la CPEF de rapporter des informations d'utilisation de service de l'utilisateur ; et
recevoir les informations d'utilisation de service courantes de l'utilisateur qui sont envoyées par la PCEF en fonction du message d'indication.

3. Procédé selon la revendication 2, dans lequel :
la réception des informations d'utilisation de service courantes de l'utilisateur qui sont envoyées par la PCEF en fonction du message d'indication consiste à :
par le biais d'une interface Gx, recevoir les informations d'utilisation de service courantes de l'utilisateur qui sont envoyées par la PCEF en fonction du message d'indication.

4. Procédé selon la revendication 2, dans lequel :
la réception des informations d'utilisation de service courantes de l'utilisateur qui sont envoyées par la PCEF en fonction du message d'indication consiste à :
par le biais d'une interface service d'utilisateur commuté à authentification distante, RADIUS, recevoir les informations d'utilisation de service courantes de l'utilisateur qui sont envoyées par la PCEF dans le mode de protocole de facturation RADIUS.

5. Procédé selon l'une quelconque des revendications 2 à 4, dans lequel :
le message d'indication indique en outre un mode de rapport et/ou un intervalle de rapport pour le rapport des informations d'utilisation de service courantes par la PCEF.

6. Procédé selon l'une quelconque des revendications 1 à 5, dans lequel l'obtention des informations d'utilisation de service courantes de l'utilisateur consiste à :
envoyer un message d'indication à une fonction de mise en vigueur de stratégies et de facturation, PCEF, le message d'indication donnant pour instruction à la PCEF de rapporter les informations d'utilisation de service courantes de l'utilisateur à un système de facturation en ligne, OCS, et/ou un système de facturation hors ligne, OFCS;
envoyer une commande d'interrogation des informations d'utilisation de service courantes de l'utilisateur à l'OCS et/ou l'OFCS ; et
recevoir les informations d'utilisation de service courantes de l'utilisateur qui sont envoyées par l'OCS et/ou l'OFCS.

7. Procédé selon l'une quelconque des revendications 1 à 6, dans lequel :
les informations d'historique d'utilisation de service de l'utilisateur sont le trafic et/ou la durée de l'historique d'utilisation de service de l'utilisateur.

8. Procédé selon la revendication 7, dans lequel :
la prise de la décision de stratégie en fonction des informations d'historique d'utilisation de service courantes de l'utilisateur consiste à :
si le trafic et/ou la durée dans les informations d'historique d'utilisation de service courantes de l'utilisateur satisfont une condition de décision de stratégie, effectuer la décision de stratégie en fonction d'une stratégie locale ou d'une stratégie obtenue à partir d'un élément de réseau externe.

9. Procédé selon l'une quelconque des revendications 1 à 8, dans lequel :
la stratégie est une stratégie de qualité de service, QoS, ou une stratégie de routage, ou une stratégie de facturation.

10. Appareil de commande de stratégie, comprenant :
un module d'obtention (601), adapté pour obtenir des informations d'utilisation de service courantes d'un utilisateur ;
un module de mémorisation de calcul (602), adapté pour additionner les informations d'utilisation de service courantes de l'utilisateur obtenues par le module d'obtention (601) et des informations d'historique d'utilisation de service de l'utilisateur pour obtenir des informations d'historique d'utilisation de service courantes de l'utilisateur, et mémoriser les informations d'historique d'utilisation de service courantes ; dans lequel le module de mémorisation de calcul (602) comprend : un sous-module de calcul (6021), adapté pour additionner les informations d'utilisation de service courantes de l'utilisateur et les informations d'historique d'utilisation de service mémorisées dans un gisement de profil d'abonnement, SPR ; et un sous-module de mémorisation (6022), adapté pour mémoriser le résultat de calcul obtenu par le sous-module de calcul (6021) dans le SPR comme informations d'historique d'utilisation de service courantes de l'utilisateur ; et
un module de décision (603), adapté pour prendre une décision de stratégie en fonction des informations d'historique d'utilisation de service courantes de l'utilisateur.
